(19) Europäisches Patentamt
European Patent Office
Office européen des brevets

(11) **EP 3 238 137 B1**

(12) **FASCICULE DE BREVET EUROPEEN**

(45) Date de publication et mention de la délivrance du brevet:
**18.10.2023 Bulletin 2023/42**

(21) Numéro de dépôt: **15801869.7**

(22) Date de dépôt: **01.12.2015**

(51) Classification Internationale des Brevets (IPC):
**G06F 16/56** (2019.01)   **G06F 16/583** (2019.01)
**G06N 20/00** (2019.01)   **G06F 18/00** (2023.01)
**G06V 10/70** (2022.01)

(52) Classification Coopérative des Brevets (CPC):
**G06N 20/00; G06F 16/56; G06F 16/5838; G06F 18/00; G06V 10/70**

(86) Numéro de dépôt international:
**PCT/EP2015/078125**

(87) Numéro de publication internationale:
**WO 2016/102153 (30.06.2016 Gazette 2016/26)**

(54) **REPRESENTATION SEMANTIQUE DU CONTENU D'UNE IMAGE**

SEMANTISCHE DARSTELLUNG DES INHALTS EINES BILDES

SEMANTIC REPRESENTATION OF THE CONTENT OF AN IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2014 FR 1463237**

(43) Date de publication de la demande:
**01.11.2017 Bulletin 2017/44**

(73) Titulaire: **Commissariat à l'Énergie Atomique et aux Énergies Alternatives
75015 Paris (FR)**

(72) Inventeurs:
• **POPESCU, Adrian**
**92120 Montrouge (FR)**
• **BALLAS, Nicolas**
**91191 Gif-sur-Yvette Cedex (FR)**
• **GINSCA, Alexandru Lucian**
**92120 Montrouge (FR)**
• **LE BORGNE, Hervé**
**75015 Paris (FR)**

(74) Mandataire: **Atout PI Laplace
Immeuble "Visium"
22, avenue Aristide Briand
94117 Arcueil Cedex (FR)**

(56) Documents cités:
**US-A1- 2007 078 846**

• **RAHMAN MD M ET AL: "A unified image retrieval framework on local visual and semantic concept-based feature spaces", JOURNAL OF VISUAL COMMUNICATION AND IMAGE REPRESENTATION, ACADEMIC PRESS, INC, US, vol. 20, no. 7, 1 octobre 2009 (2009-10-01), pages 450-462, XP026467879, ISSN: 1047-3203, DOI: 10.1016/J.JVCIR.2009.06.001 [extrait le 2009-06-10]**
• **LINAN FENG ET AL: "Semantic-visual concept relatedness and co-occurrences for image retrieval", IMAGE PROCESSING (ICIP), 2012 19TH IEEE INTERNATIONAL CONFERENCE ON, IEEE, 30 septembre 2012 (2012-09-30), pages 2429-2432, XP032333690, DOI: 10.1109/ICIP.2012.6467388 ISBN: 978-1-4673-2534-9**

**Description**

**Domaine de l'invention**

L'invention concerne en général le domaine technique de la fouille de données et en particulier le domaine technique de l'annotation automatique du contenu d'une image.

**Etat de la Technique**

Un document "multimédia" comporte - par étymologie - des informations de différentes natures, qui sont généralement associées à des capacités sensorielles ou cognitives distinctes (par exemple à la vision ou à l'audition). Un document multimédia peut être par exemple une image accompagnée de «tags», c'est-à-dire d'annotations ou bien correspondre une page web comportant des images et du texte.

Un document numérique peut généralement être divisé en plusieurs "canaux" d'information, lesquels peuvent inclure par exemple de l'information textuelle (provenant de la reconnaissance de caractère OCR par exemple) et des informations visuelles (telles que des illustrations et/ou des photos identifiées dans le document). Une vidéo peut également être aussi séparée en plusieurs de tels canaux: un canal visuel (e.g. les frames de la vidéo), un canal sonore (e.g. la bande son), un canal textuel (e.g. résultant de la transcription de la parole en texte, ainsi que les métadonnées de la vidéo, par exemple date, auteur, titre, format...). Un document multimédia peut donc contenir, en particulier, des informations visuelles (i.e. des pixels) et textuelles (i.e. des mots).

Lors d'une fouille dans des données multimédia, le requêtage (i.e. pour la recherche dans des bases de données) peut faire intervenir des requêtes qui peuvent elles-mêmes revêtir différentes formes: (a) un ou plusieurs documents multimédia (combinant images et textes), et/ou (b) sous forme d'information visuelle uniquement (recherche dite "recherche par l'image" ou "par le contenu de l'image") ou bien encore (c) sous forme textuelle uniquement (cas général des moteurs de recherche grand public).

Le problème technique de la recherche d'information dans des bases de données multimédia consiste en particulier à retrouver les documents de la base ressemblant le plus possible à la requête. Dans une base de données annotée (par exemple par des labels et/ou des étiquettes), un problème technique posé par la classification consiste à prédire ce ou ces labels pour un nouveau document non-annoté.

Le contenu d'un document exclusivement visuel doit être associé à des modèles de classification qui déterminent les classes auxquelles le document peut être associé, par exemple en l'absence de tags ou d'annotations ou de description par mots-clefs de l'image (ou indirectement via le contexte de publication de l'image par exemple). Dans le cas où ces métadonnées sont accessibles, le contenu d'un document multimédia (combinant image et texte) doit être décrit de manière consistante et efficace.

Un problème technique initial consiste donc à déterminer une manière efficace de déterminer le contenu visuel d'une image, c'est-à-dire de construire une représentation sémantique de cette dernière. Si des annotations textuelles existent, il s'agira par exemple de combiner la représentation du contenu visuel avec ces annotations.

La pertinence de la représentation ainsi construite peut s'effectuer de multiples manières, dont, en particulier, la mesure de la *précision* des résultats. En matière de *recherche* d'images, la précision est donnée par le nombre d'images sémantiquement similaires à une requête image, texte ou une combinaison image et texte. En matière de *classification* d'images, la *pertinence* s'évalue par la précision des résultats (e.g. proportion de labels correctement prédits) et sa capacité de généralisation (e.g. la classification «fonctionne» pour plusieurs classes à reconnaître). Le temps de calcul (généralement déterminé par la complexité de la représentation) est généralement un facteur important dans ces deux scénarios de recherche et de classification.

La disponibilité de larges collections d'images structurées (par exemple selon des concepts, telles *ImageNet* (Deng et al., 2009), associée à la disponibilité de méthodes d'apprentissage (qui présentent des possibilités de passage à l'échelle suffisantes) a conduit à la proposition de représentations sémantiques du contenu visuel (confer Li et al., 2010; Su et Jurie, 2012; Bergamo et Torresani, 2012). Ces représentations sont généralement mises en oeuvre en partant d'un ou plusieurs descripteurs visuels de base (i.e. locaux ou globaux ou selon une combinaison des deux). Ensuite, ces descriptions sont utilisées par des méthodes d'apprentissage afin de construire des classificateurs ou descripteurs («classifiers» en anglais) pour des concepts individuels. Un classificateur ou descripteur assigne ou alloue ou associe une ou plusieurs classes (e.g. nom, qualité, propriété, etc) à un objet, ici une image. Finalement, la description finale est obtenue par l'agrégation des scores de probabilité donnés par la classification des images de test contre chaque classificateur associé aux concepts qui composent la représentation (Torresani et al., 2010). De leur côté, Li et al., en 2010 ont introduit *ObjectBank,* qui une représentation sémantique composée des réponses d'approximativement 200 classificateurs pré-calculés à partir d'un base d'images validée manuellement. En 2012, Su et Jurie ont sélectionné manuellement 110 attributs pour mettre en oeuvre une représentation sémantique des images. En 2010, Torresani et al. ont introduit les «classèmes», qui sont basées sur plus de 2000 modèles de concepts individuels appris en utilisant des images du Web. A la suite de ce travail, Bergamo et Torresani introduisent en 2012 les «meta-classes», i.e. des représentations fondées sur des concepts provenant *d'ImageNet* dans laquelle les concepts similaires sont regroupés et appris conjointement.

En 2013, les réseaux de neurones profonds ont été utilisés afin de résoudre des problèmes de classification d'images à large échelle (Sermanet et al.; Donahue et al.) Selon cette approche, les scores de classification donnés par la dernière couche du réseau sont utilisables comme représentation sémantique du contenu d'une image. Toutefois, plusieurs limitations matérielles font qu'il est difficile de représenter efficacement un grand nombre de classes et un très grand nombre d'images au sein d'un même réseau. Le nombre de classes traitées est typiquement de l'ordre de 1000 et le nombre d'images de l'ordre d'un million.

En 2012, Bergamo et Torresani ont publié un article intitulé "*Meta-class features for large-scale object catégorisation on a budget*" (CVPR. IEEE, 2012). Les auteurs proposent une représentation compacte des images en regroupant des concepts de la hiérarchie *ImageNet* en utilisant leur affinité visuelle. Les auteurs utilisent une *quantization* (i.e. les dimensions les plus saillantes sont mises à 1 et les autres à 0) ce qui rend le descripteur plus compact. Néanmoins, cette approche définissant des "méta classes" ne permet pas d'assurer une représentation diversifiée du contenu des images. Par ailleurs, la quantization entraîne également des baisses de performances.

En 2009, Rahan et al. ont publié un article intitulé "A unified image retrieval framework on local visual and semantic concept-based feature spaces" (Journal of visual communication and image représentation academic press, INC, US, vol. 20, no. 7, 1 octobre 2009, pages 450-462, ISSN: 1047-3203, DOI:10.1016/J.JVCIR.2009.06.001). Les auteurs proposent une représentation des images par régions. U

L'état de la technique actuel aborde assez rarement les aspects relatifs à la *diversité* de la recherche d'images. La diversité implique que différents concepts présents dans une image apparaissent dans la représentation associée.

L'invention proposée dans le présent document permet de répondre à ces besoins ou limitations, au moins en partie.

## Résumé de l'invention

Il est divulgué un procédé mis en oeuvre par ordinateur pour déterminer une description sémantique du contenu d'une image, tel que décrit par la revendication 1.

Les avantages du procédé en matière de représentation sémantique parcimonieuse et diversifiée sont présentés.

Le procédé selon l'invention trouvera avantageusement application dans le cadre de la recherche d'informations multimédia et/ou de la classification de documents (par exemple dans un contexte de fouille de données ou «*data mining*» en anglais).

Selon un aspect de l'invention, les documents visuels sont représentés par les probabilités obtenues en comparant ces documents à des classificateurs de concepts individuels.

Selon un aspect de l'invention, une représentation diversifiée du contenu des images est permise.

Selon un aspect de l'invention, le caractère compact des représentations est assuré sans perte de performances.

L'invention propose une représentation sémantique qui est à la fois compacte et diversifiée.

Avantageusement, l'invention propose des représentations sémantiques du contenu visuel qui associent diversité et caractère creux, deux aspects qui ne sont actuellement pas abordés dans la littérature du domaine. La diversité est importante parce qu'elle garantit que différents concepts présents dans l'image apparaissent dans la représentation. Le caractère creux est important car il permet d'accélérer le processus de recherche d'images par similarité au moyen de fichiers inversés.

Avantageusement, l'invention assure une capacité de généralisation de la représentation sémantique (i.e. le système peut fonctionner de manière indépendante du contenu lui-même).

Avantageusement, le procédé selon l'invention est généralement rapide à calculer et à utiliser pour des bases de données multimédia massives.

Avantageusement, le procédé selon l'invention permet des représentations sémantiques qui sont à la fois diversifiées et creuses.

L'invention trouvera avantageusement application pour toute tâche qui nécessite la description d'un document multimédia (combinant des informations visuelles et textuelles) en vue de la recherche ou de la classification de ce document. Par exemple, le procédé permet la mise en oeuvre de moteurs de recherche multimédia ; l'exploration de fonds multimédia «massifs» est généralement considérablement accélérée en raison du caractère creux de la représentation sémantique du procédé. L'invention permet la reconnaissance à large échelle des objets présents dans une image ou dans une vidéo. Il sera par exemple possible, en vue de proposer des publicités contextuelles, de créer des profils utilisateurs à partir de leurs images et d'utilisation ces profils pour cibler ou personnaliser des publicités.

## Description des figures

Différents aspects et avantages de l'invention vont apparaitre en appui de la description d'un mode préféré d'implémentation de l'invention mais non limitatif, avec référence aux figures ci-dessous :

La figure 1 illustre la classification ou l'annotation d'un document;

La figure 2 illustre un exemple de classification supervisée;

La figure 3 illustre le schéma global d'un exemple de procédé selon l'invention;

La figure 4 détaille certaines étapes spécifiques au procédé selon l'invention.

## Description détaillée de l'invention

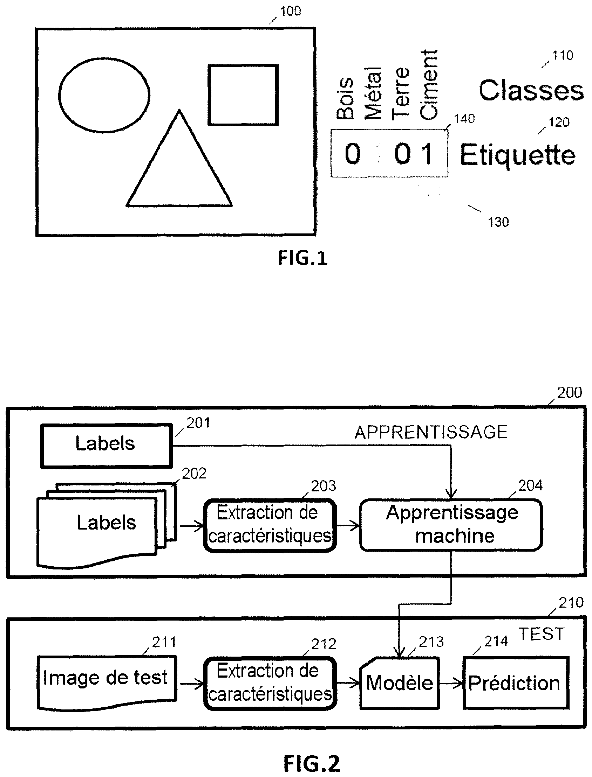

La figure 1 illustre la classification ou l'annotation d'un document. Dans l'exemple considéré, le document est une image 100. Les labels 130 de ce document indiquent son degré d'appartenance à chacune des classes 110 considérées. En considérant par exemple quatre classes (ici «bois», «métal», «terre» et «ciment»), l'étiquette 120 annotant le document 100 est un vecteur 140 à 4 dimensions dont chaque composante est une probabilité (égale à 0 si le document ne correspond pas à la classe, et égale à 1 si le document y correspond de manière certaine).

La figure 2 illustre un exemple de classification supervisée. Le procédé comprend notamment deux étapes: une première étape dite d'apprentissage 200 et une seconde étape dite de test 210. L'étape d'apprentissage 200 est généralement effectuée «hors ligne» (c'est-à-dire de manière préalable ou encore réalisée à l'avance). La seconde étape 210 est généralement effectuée «en ligne» (c'est-à-dire en temps réel pendant les étapes de recherche et/ou de classification proprement dite).

Chacune de ces étapes 200 et 210 comporte une étape de représentation par caractéristiques («*feature extraction*» en anglais, étape 203 et 212) qui permet de décrire un document par un vecteur de dimension fixe. Ce vecteur est généralement extrait de l'une des modalités (i.e. canal) du document seulement. Les caractéristiques visuelles incluent les représentations locales (i.e. sacs de mots visuels, vecteurs de Fisher etc.) ou globales (histogrammes de couleurs, descriptions de textures etc.) du contenu visuel ou des représentations sémantiques.

Les représentations sémantiques sont généralement obtenues par l'utilisation de classificateurs intermédiaires qui fournissent des valeurs de probabilité d'apparition d'un concept individuel dans l'image et incluent les classèmes ou les méta-classes. De manière schématique, un document visuel sera représenté par un vecteur de type {«dog»=0.8, «cat»=0.03, «car»=0.03, ..., «sunny»=0.65}.

Lors de la phase d'apprentissage 200, une série de tels vecteurs et les labels correspondants 202 alimentent un module d'apprentissage («machine learning» 204) qui produit ainsi un modèle 213. En phase de test 210, un document multimédia «de test» 211 est décrit par un vecteur de même nature que lors de l'apprentissage 200. Celui-ci est utilisé en entrée du modèle 213 préalablement appris. En sortie est retournée une prédiction 214 de l'étiquette du document de test 211.

L'apprentissage mis en oeuvre à l'étape 204 peut comprendre l'utilisation de différentes techniques, considérées seules ou en combinaison, notamment de «séparateurs à vaste marge» (SVM), du procédé d'apprentissage appelé «boosting», ou bien encore de l'utilisation de réseaux de neurones, par exemple «profonds» («*deep neural networks*»).

Selon un aspect spécifique de l'invention, il est divulgué une étape d'extraction de caractéristiques avantageuses (étapes 203 et 212). En particulier, le descripteur sémantique considéré fait intervenir un ensemble de classificateurs («en banc»).

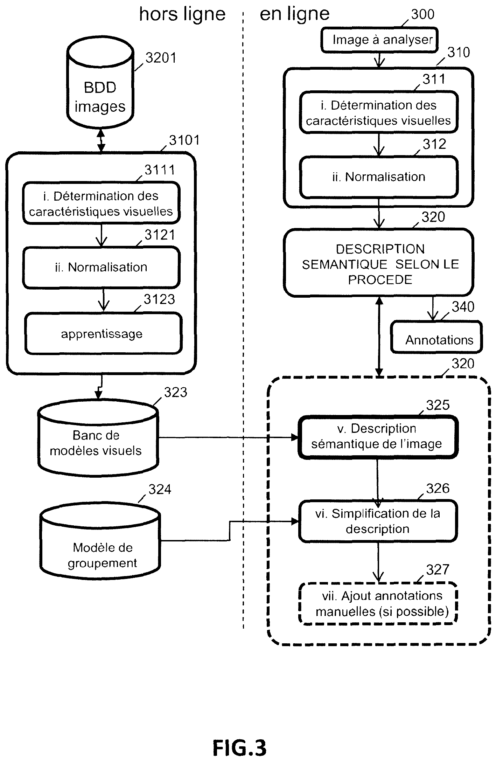

La figure 3 illustre le schéma global d'un exemple de procédé selon l'invention. La figure illustre un exemple de construction d'une représentation sémantique associée à une image donnée.

La figure illustre des étapes «en ligne» (ou «online» ou «actif»). Ces étapes désignent des étapes qui sont effectuées sensiblement au moment de la recherche ou de l'annotation des images. La figure illustre également des étapes «hors ligne» (ou «offline» ou «passif»). Ces étapes sont généralement effectuées préalablement, i.e. antérieurement (au moins en partie).

De manière préalable ou « hors ligne » (« offline » en anglais), l'ensemble des images d'une base de données fournie 3201 peut être analysé (le procédé selon l'invention peut aussi procéder par accumulation et construire la base de données progressivement et/ou les groupements par itération). Des étapes d'extraction des caractéristiques visuelles 3111 et de normalisation 3121 sont répétées pour chacune des images constituant ladite base de données d'images 3201 (cette dernière est structurée en n concepts C). Une ou plusieurs étapes (optionnelles) d'apprentissage 3123 peuvent être effectuées (exemples positifs et/ou négatifs, etc). L'ensemble de ces opérations peut servir par ailleurs à déterminer ou optimiser l'établissement des modèles visuels 323 (confer ci-après) ainsi que des modèles de groupement 324.

Dans l'étape 323, il est reçu un banc de modèles visuels. Ce banc de modèles peut être déterminé de différentes manières. En particulier, le banc de modèles peut être reçu d'un module ou système tiers, par exemple à la suite de l'étape 3101. Un « banc » correspond à une pluralité de modèles visuels V (dits « modèles visuels individuels »). Un « modèle visuel individuel » est associé à chacun des concepts initiaux (« soleil couchant », « chien », etc) de la base de référence. Les images associées à un concept donné représentent des exemples positifs pour chaque concept (tandis que les exemples négatifs - qui sont par exemple choisis par échantillonnage - sont associés aux images qui représentent les autres concepts de la base d'apprentissage).

Dans l'étape 324, les concepts (initiaux, i.e. tels que reçus) sont groupés. Des modèles de groupements sont reçus (par exemple de systèmes tiers).

De manière générale, selon le procédé de l'invention, une image à analyser 300 est soumise/reçue et fait l'objet de différents traitements et analyses 310 (lesquels peuvent être parfois optionnels) puis une description sémantique 320 de cette image est déterminée par le procédé selon l'invention. En sortie sont déterminées une ou plusieurs annotations 340.

Dans le détail de l'étape 310, dans une première étape 311 (i), les caractéristiques visuelles de l'image 300 sont déterminées. La base 3201 (qui comprend généralement des milliers d'images voire des millions d'images) est - initialement i.e. préalablement- structurée en n concepts C (dans certains modes de réalisation, pour certaines applications, n peut être de l'ordre de 10 000). Les caractéristiques visuelles de l'image sont déterminées à l'étape 311 (mais elles peuvent être également reçues d'un module tiers ; par exemple, elles peuvent être fournies en tant que métadonnées). L'étape 311 est généralement la même que l'étape 3111. Le contenu de l'image 300 est ainsi représenté par un vecteur de taille fixe (ou «signature»). Dans une seconde étape 312 (ii), les caractéristiques visuelles l'image 300 sont normalisées (le cas échéant, c'est-à-dire si cela est nécessaire; il se peut que des caractéristiques visuelles reçues soient déjà normalisées).

Dans le détail de l'étape 320 (description sémantique du contenu de l'image selon le procédé), à l'étape 325 (v) selon l'invention, il est déterminé une description sémantique de chaque image. Dans l'étape 326 (vi), selon l'invention, cette description sémantique peut être « élaguée » (ou « simplifiée » ou « réduite »), pour une ou pour plusieurs images. Dans une étape optionnelle 327 (vii), des annotations de diverses provenances (dont des annotations manuelles) peuvent être ajoutées ou exploitées.

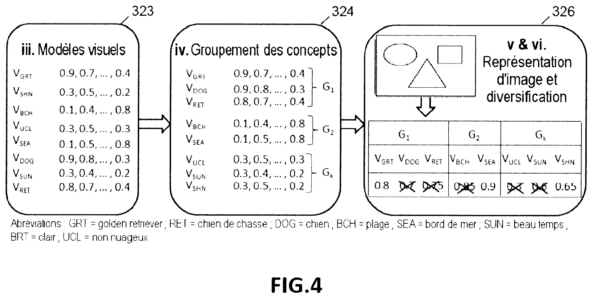

La figure 4 explicite en détail certaines étapes spécifiques au procédé selon l'invention. Les étapes v, vi et optionnellement vii (prises en combinaison avec les autres étapes présentement décrites) correspondent aux spécificités du procédé selon l'invention. Ces étapes permettent notamment d'obtenir une représentation *diversifiée* et *parcimonieuse* des images d'une base de données.

Une représentation « diversifiée » est permise par l'utilisation de groupes - en lieu et place des concepts individuels initiaux tels que fournis par la base de donnée annotée originellement - qui permet avantageusement de représenter une plus grande diversité des aspects des images. Par exemple, un groupe pourra contenir différentes races de chiens et différents niveaux de granularité de ces concepts («golden retriever», «labrador retriever», «border collie», «retriever» etc.). Un autre groupe pourra être associé à un concept naturel (par exemple lié à des scènes de bord de mer), un autre groupe sera relatif à la météorologie («beau temps», «nuageux», «orageux» etc).

Une représentation «creuse» des images correspond à une représentation contenant un nombre réduit de dimensions non nulles dans les vecteurs (ou signatures d'images). Ce caractère parcimonieux (ou « creux ») permet une recherche efficace dans des bases de données d'images même à grande échelle (les signatures des images sont comparées, par exemple les unes aux autres, généralement en mémoire vive; un index de ces signatures, au moyen de fichiers inversés par exemple, permet d'accélérer le processus de recherche d'images par similarité).

Les deux caractères de « représentation diversifiée » et de « parcimonie » fonctionnent en synergie ou de concert: la représentation diversifiée selon l'invention est compatible (e.g. permise ou facilitée) avec une recherche parcimonieuse; la recherche parcimonieuse tire avantageusement parti d'une représentation diversifiée.

A l'étape 324, les concepts sont groupés afin d'obtenir k groupes $G_x$, avec x = 1, ... k et k < n.

$$G_x = \{V_{x1}, V_{x2}, ..., V_{xy}\} \quad (1)$$

Différentes méthodes (éventuellement combinées entre elles) peuvent être utilisées pour la segmentation en groupes. Cette segmentation peut être statique et/ou dynamique et/ou configurée et/ou configurable.

Les groupements peuvent notamment se fonder sur la similarité visuelle des images et/ou sur la similarité sémantique des images (e.g. en fonction des annotations accessibles). Dans un mode de réalisation, le groupement des concepts est supervisé, i.e. bénéficie d'une expertise cognitive humaine. Dans d'autres modes de réalisation, le groupement est non-supervisé. Dans un mode de réalisation, le groupement des concepts peut s'effectuer en utilisant une méthode de «clustering» telle que les K-moyennes (ou K-medoids) appliquées aux vecteurs caractéristiques de chaque image appris sur une base d'apprentissage.

Cela résulte en des vecteurs caractéristiques moyens de clusters. Ce mode de réalisation permet en particulier une intervention humaine minimale en amont (seul le paramètre K est à choisir). Dans d'autres modes de réalisation, l'intervention de l'utilisateur en matière de groupement est exclue (par exemple en utilisant une méthode de clustering telle le « shared nearest neighbor » qui permet de s'abstraire de toute intervention humaine).

Dans d'autres modes de réalisation, le groupement est effectué selon des méthodes de regroupement hiérarchique et/ou des algorithmes de maximisation de l'espérance (EM) et/ou des algorithmes basés densité tels que DBSCAN ou OPTICS et/ou des méthodes connexionnistes telles que des cartes auto adaptatives.

Chaque groupe correspond à un «aspect» (conceptuel) possible pouvant représenter une image. Différentes conséquences ou avantages découlent de la multiplicité des manières possible de procéder aux groupements (nombre de groupes et taille de chaque groupe, i.e. nombre d'images au sein d'un groupe). La taille d'un groupe peut être variable afin de répondre à des besoins applicatifs concernant une granularité variable de la représentation. Le nombre des groupes peut correspondre à des partitions plus ou moins fines (plus ou moins grossières) que les concepts initiaux (tels qu'hérités ou accédés dans la base d'images annotée d'origine).

La segmentation en groupes de tailles appropriées permet notamment de caractériser (plus ou moins finement, i.e. selon différentes granularités) différents domaines conceptuels. Chaque groupe peut correspondre à un «méta concept» par exemple plus grossier (ou plus large) que les concepts initiaux. L'étape consistant à segmenter ou partitionner l'espace conceptuel aboutit avantageusement à la création (ex nihilo) de « méta concepts ». En d'autres termes, l'ensemble de ces groupes (ou «méta-concepts») forment une nouvelle partition de l'espace de représentation conceptuel dans lequel les images sont représentées.

A l'étape 325 selon l'invention, il est calculé ou déterminé, pour toute image de test, une ou plusieurs caractéristiques visuelles, qui sont normalisées (étapes i et ii) et comparées aux modèles visuels des concepts (étape iii) afin d'obtenir une description sémantique D de cette image basée sur la probabilité d'occurrence $p(V_{xy})$ (avec $0 \leq p(V_{xy}) \leq 1$) des éléments du banc de concepts.

La description d'une image est donc structurée selon les groupes de concepts calculés en iv :

$$D = \{\{p(V_{11}), p(V_{12}), \dots, p(V_{1a})\}, \{p(V_{21}), p(V_{22}), \dots, p(V_{2b})\}, \dots, \{p(V_{k1}), p(V_{k2}), \dots, p(V_{kc})\}\} \quad (2)$$

$$\underbrace{\phantom{xxxxxxxx}}_{G_1} \quad \underbrace{\phantom{xxxxxxxx}}_{G_2} \quad \dots \quad \underbrace{\phantom{xxxxxxxx}}_{G_k}$$

Le nombre de groupes retenus peut notamment varier en fonction des besoins applicatifs. Dans une représentation parcimonieuse, un petit nombre de groupes est utilisé, ce qui augmente la diversification mais inversement diminue l'expressivité de la représentation. Inversement, sans groupes, on a une expressivité maximale mais on diminue la diversité puisqu'un même concept sera présent à plusieurs niveaux de granularité («golden retriever», «retriever» et «dog» dans l'exemple cité ci-dessus). A la suite de l'opération de groupement, les trois concepts précédents vont se retrouver au sein d'un même groupe, qui sera représenté par une seule valeur. Il est donc proposé donc une représentation par «groupes intermédiaires» laquelle permet d'intégrer simultanément diversité et expressivité.

Dans la sixième étape 326 (vi) selon l'invention, la description D obtenue est élaguée ou simplifiée afin de garder, au sein de chaque groupe $G_x$ uniquement la ou les probabilités $p(V_{xy})$ les plus fortes et d'éliminer les faibles probabilités (qui peuvent avoir une influence négative lors du calcul de la similarité des images).

Dans un mode de réalisation, chaque groupe est associé à un seuil (éventuellement différent) et les probabilités (par exemple inférieures) à ces seuils sont éliminées. Dans un mode de réalisation, tous les groupes sont associés à un seul et même seuil permettant de filtrer les probabilités. Dans un mode de réalisation, un ou plusieurs groupes sont associés à un ou plusieurs seuils prédéfinis et les probabilités supérieures et/ou inférieures à ces seuils (ou plages de seuils) peuvent être éliminées.

Un seuil peut être déterminé de différentes manières (i.e. selon différents types de moyenne mathématique selon d'autres types d'opérateurs mathématiques). Un seuil peut également être le résultat d'un algorithme prédéfini. De manière générale, un seuil peut être statique (i.e. invariant au cours du temps) ou bien dynamique (e.g. fonction d'un ou de plusieurs facteurs extérieurs, tels que par exemple contrôlés par l'utilisateur et/ou en provenance d'un autre système). Un seuil peut être configuré (e.g. de manière préalable, c'est-à-dire «codé en dur») mais il peut également être configurable (e.g. selon le type de recherche, etc).

Dans un mode de réalisation, un seuil ne concerne pas une valeur de probabilité (e.g. un score) mais un nombre Kp(Gx), associé au rang (après tri) de la probabilité à « conserver » ou à « éliminer » un groupe Gx. Selon ce mode de réalisation, les valeurs de probabilités sont ordonnées i.e. rangées par valeur puis un nombre déterminé Kp(Gx) de valeurs de probabilités sont sélectionnées (en fonction de leur ordonnancement ou ordre ou rang) et différentes règles de filtrage peuvent être appliquées. Par exemple, si Kp(Gx) est égal à 3, le procédé peut conserver les 3 « plus grandes » valeurs (ou les 3 « plus petites », ou bien encore 3 valeurs « distribuées autour de la médiane », etc). Une règle peut être une fonction (max, min, etc).

Par exemple, en considérant un groupe 1 comprenant {P(V11) = 0.9; P(V12)=0.1; P(V13)=0.8} et un groupe 2 comprenant {P(V21) = 0.9; P(V22)=0.2 ; P(V23)=0.4}, l'application d'un filtrage par *seuil* égal à 0.5 conduira à sélectionner P(V11) et P(V13) pour le groupe 1 et P(V21) pour le groupe 2. En appliquant avec Kp(Gx)=2 une règle de filtrage « garder les valeurs les plus grandes », on gardera P(V11) et P(V13) pour le groupe 1 (même résultat que méthode 1) mais P(V21) *et P(V23)* pour le groupe 2.

La version élaguée de la description sémantique $D_e$ peut alors s'écrire comme (dans ce cas Kp(Gx) vaudrait 1):

$$D_e = \big\{\{p(V_{11}), 0, \dots, 0\}, \{0, p(V_{22}), \dots, 0\}, \dots, \{0, 0, \dots, p(V_{kc})\}\big\} \ (3)$$

avec : $p(V_{11}) > p(V_{12}), p(V_{11}) > p(V_{1a})$ pour $G_1$; $p(V_{22}) > p(V_{1b}), p(V_{22}) > p(V_{1b})$, pour $G_2$ et $p(V_{kc}) > p(V_{k1}), p(V_{kc}) > p(V_{k2})$ pour $G_k$.

La représentation donnée dans (3) illustre l'emploi d'une méthode de sélection des dimensions dite de *«max-pooling».* Cette représentation est illustrative et l'emploi de ladite méthode est entièrement facultatif. D'autres méthodes alternatives peuvent être utilisées à la place du «max pooling», telles que par exemple la technique dite *«average pooling»* (moyenne des probabilités des concepts dans chaque groupe $G_k$ ) ou bien encore la technique dite du « *soft max pooling»* (moyenne des x probabilités les plus fortes au sein de chaque groupe).

Le score des groupes sera noté $s(G_k)$ ci-après.

L'élagage décrit dans la formule (3) est *intra-groupe.* Un dernier élagage *inter-groupes* est avantageux afin d'arriver à une représentation «creuse» de l'image.

Plus précisément, partant de $D_e$ = {$s(G_1)$, $s(G_2)$, ...,$s(G_k)$} et après application de l'élagage intra-groupes décrit dans (3), les groupes ayant les plus forts scores sont seuls retenus. Par exemple, en supposant qu'une description avec uniquement deux dimensions non nulles soit souhaitée, et que $s(G_1) > s(G_{k2}) > ... > s(G_2)$, alors la représentation finale sera donnée par:

$$D_f = \{s(G_1), \ 0, \dots, s(G_k)\} \ (4)$$

La sélection d'un ou de plusieurs concepts dans chaque groupe permet d'obtenir une description «diversifiée» des images, c'est-à-dire incluant différents aspects (conceptuels) de l'image. Pour rappel, un «aspect» ou « meta aspect » de l'espace conceptuel correspond à un groupe de concepts, choisis parmi les concepts initiaux.

L'avantage du procédé proposé dans cette invention est qu'il «force» la représentation d'une image initiale sur ou à un ou plusieurs de ces aspects (ou «méta concepts»), même si l'un de ces aspects est initialement prédominant. Par exemple, si une image est majoritairement annotée par les concepts associés à *«chien», «golden retriever»* et *«chien de chasse»* mais aussi, dans une moindre mesure, par les concepts «voiture» et *«lampadaire»,* et que l'étape iv du procédé proposé aboutit à former trois méta-concepts (i.e. groupes/aspects...) contenant *{«chien» + « golden retriever»+ « chien de chasse»}* pour le premier groupe, *{«voiture»+ « vélo»+ « motocyclette»}* pour le second groupe et *{«lampadaire» + «ville» + «rue»}* pour le troisième groupe alors une représentation sémantique selon l'état de la technique portera l'essentiel de sa pondération sur les concepts *«chien», «golden retriever»* et *«chien de chasse»* tandis que le procédé selon l'invention permettra d'identifier que ces quatre concepts décrivent un aspect semblable et attribuera - aussi - du poids à l'aspect d'appartenance de «*voiture*» et «*lampadaire*» permettant ainsi de retrouver de manière plus précise des images de chiens prises en ville, à la l'extérieur, en présence de moyens de transport.

Avantageusement, dans le cas d'un grand nombre initial de concepts et d'une représentation «creuse», tel que proposé par le procédé selon l'invention, la représentation selon le procédé selon l'invention permet une meilleure *comparabilité* des dimensions de la description. Ainsi, sans groupes, une image représentée par *«golden retriever»* et une autre représentée par «*retriever*» auront une similarité égale ou proche de zéro du fait de la présence de ces concepts. Avec les groupements selon l'invention, la présence des deux concepts contribuera à accroître la similarité (conceptuelle) des images du fait de leur appartenance commune à un groupe.

Du point de l'expérience utilisateur, la recherche par le contenu de l'image selon l'invention permet avantageusement de prendre en compte plus d'aspects de la requête (et non pas seulement le ou les concepts «dominants» selon la recherche par l'image connue dans l'état de la technique). La «diversification» résultante du procédé est particulièrement avantageuse. Elle est inexistante dans les descripteurs d'images actuels. En fixant la taille des groupes à la valeur limite égale à 1, il est obtenu un procédé sans diversification de la représentation sémantique des images.

Dans une étape 322 (vii), s'il existe des annotations textuelles associées à l'image renseignées manuellement (généralement de haute qualité sémantique), les concepts associés sont ajoutés à la description sémantique de l'image avec une probabilité 1 (ou au moins supérieure aux probabilités associées aux tâches de classification automatique par exemple). Cette étape demeure entièrement optionnelle puisqu'elle dépend de l'existence d'annotations manuelles qui peuvent ne pas être disponibles).

Dans un mode de réalisation, le procédé selon l'invention effectue des regroupements d'images de manière unique (en d'autres termes, il existe N groupes de M images). Dans un mode de réalisation, des «collections» i.e. des «ensembles» de groupes de tailles différentes sont pré-calculés (en d'autres termes il existe A groupes de B images, C groupes de D images, etc). La recherche par le contenu de l'image peut être «paramétrisée», par exemple selon une ou plusieurs options présentées à l'utilisateur. Le cas échéant, l'une ou l'autre des collections pré-calculées est activée (i.e. la recherche s'effectue au sein de la collection déterminée). Dans certains modes de réalisation, le calcul des différentes collections est effectué en arrière-plan des recherches. Dans certains modes de réalisation, la sélection d'une ou de plusieurs collections est (au moins en partie) déterminée en fonction des retours des utilisateurs.

De manière générale, les procédés et systèmes selon l'invention concernent l'annotation ou la classification ou la description automatique du contenu de l'image considéré en tant que tel (i.e. sans nécessairement prendre en considération d'autres sources de données que le contenu de l'image ou les métadonnées associées). L'approche automatique divulguée par l'invention peut être complétée ou combinée avec des données contextuelles associées des images (par exemple liées aux modalités de publication ou de restitution visuelle de ces images). Dans une variante de réalisation, les informations contextuelles (par exemple les mots-clefs issus de la page web sur laquelle est publiée l'image considérée ou bien encore le contexte de restitution s'il est connu) peuvent être utilisées. Ces informations peuvent par exemple servir à corroborer, provoquer ou inhiber ou confirmer ou infirmer les annotations extraites de l'analyse du contenu de l'image selon l'invention. Différents mécanismes d'ajustements peuvent en effet être combinés avec l'invention (filtres, pondération, sélection, etc). Les annotations contextuelles peuvent être filtrées et/ou sélectionnées puis ajoutées à la description sémantique (avec des probabilités ou facteurs ou coefficients ou pondérations ou intervalles de confiance adaptés par exemple).

Des modes de réalisation de l'invention sont décrits ci-après.

Le vecteur représentatif de caractéristiques visuelles extraites d'une image est reçu (par exemple d'un autre système). Ce vecteur est obtenu après l'extraction des caractéristiques visuelles du contenu de l'image, par exemple au moyen de classificateurs prédéfinis et connus de l'état de la technique, et de divers autres traitements notamment de normalisation et peut être exprimé dans un référentiel différent. Le procédé « exprime » ou transforme (ou convertit ou translate) le vecteur reçu dans le référentiel de travail adéquat. La signature de l'image est donc un vecteur (comprenant des composantes) d'une taille constante de taille C.

Une base initialement annotée fournit également un ensemble de concepts initiaux, par exemple sous la forme d'annotations (textuelles). Ces groupes de concepts peuvent notamment être reçus sous forme de « bancs ». Une signature sémantique est alors exprimée avec des références à des groupes de « concepts visuels initiaux » (objets textuels) i.e. tels que reçus. Les références aux groupes sont donc des composants du vecteur.

La mise en correspondance des composantes du vecteur avec les groupes de concepts est effectuée. Le procédé selon l'invention manipule cad partitionne les concepts visuels initiaux selon $G_x = \{V_{x1}, Vx_2, \dots, V_{xy}\}$, avec $x = 1, \dots$ k et $k < n.$ et créée une nouvelle signature de l'image.

Le procédé détermine ensuite une description sémantique du contenu de l'image en modifiant la signature initiale de l'image, i.e. en conservant ou en annulant (e.g. mise à zéro) un ou plusieurs composants (références aux groupes) du vecteur. Le vecteur correspondant à la signature sémantique est toujours de taille C.

Différentes règles de filtrage peuvent s'appliquer.

Dans un développement, la règle de filtrage comprend le maintien ou la mise à zéro d'une ou de plusieurs composantes du vecteur correspondant aux groupes de concepts visuels initiaux par application d'un ou de plusieurs seuils.

La description sémantique peut être modifiée de manière intra-groupe par l'application de seuils, lesdits seuils étant sélectionnés parmi des opérateurs mathématiques comprenant par exemples des moyennes mathématiques.

L'élagage peut être intra-groupe (e.g. sélection des dimensions dite de «max-pooling ou «average pooling» (moyenne des probabilités des concepts dans chaque groupe $G_k$ ) ou bien encore selon la technique dite du « soft max pooling» (moyenne des x probabilités les plus fortes au sein de chaque groupe).

Dans un développement, la règle de filtrage comprend le maintien ou la mise à zéro d'une ou de plusieurs composantes du vecteur correspondant aux groupes de concepts visuels initiaux par application d'une statistique d'ordre.

En statistiques, la statistique d'ordre de rang k d'un échantillon statistique est égale à la k-ième plus petite valeur. Associée aux statistiques de rang, la statistique d'ordre fait partie des outils fondamentaux de la statistique non paramétrique et de l'inférence statistique. La statistique d'ordre comprend les statistiques du minimum, du maximum, de la médiane de l'échantillon ainsi que les différents quantiles, etc.

Des filtres (désignation puis action) fondés sur des seuils et des règles de statistique d'ordre peuvent se combiner (il est possible d'agir sur les groupes de concepts - en tant que composantes - avec uniquement des seuils ou uniquement des statistique d'ordre ou les deux).

Par exemple, la description sémantique déterminée peut être modifiée de manière intragroupe groupes par application d'une règle de filtrage prédéfinie d'un nombre Kp(Gx) de valeurs de probabilités d'occurrence d'un concept initial au sein de chaque groupe.

Dans chaque groupe, a) les valeurs de probabilités (d'occurrence d'un concept initial) sont ordonnées; b) un nombre Kp(Gx) est déterminé; et c) une règle de filtrage prédéfinie est appliquée (cette règle est choisie parmi le groupe comprenant notamment les règles « sélection des Kp(Gx) valeurs maximales », « sélection des Kp(Gx) valeurs minimales », « sélection des Kp(Gx) valeurs autour la médiane », etc...). Enfin la description sémantique de l'image est modifiée au moyen des valeurs de probabilités ainsi déterminées.

Dans un développement, le procédé comprend en outre une étape consistant à déterminer une sélection de groupes de concepts visuels initiaux et une étape consistant à mettre à zéro les composantes correspondantes aux groupes de concepts visuels sélectionnés (plusieurs composantes ou toutes).

Ce développement correspond à un filtrage inter-groupes.

Dans un développement, la segmentation en groupes de concepts visuels initiaux est fondée sur la similarité visuelle des images.

L'apprentissage peut être non-supervisé; l'étape 324 fournit de tels groupes fondés sur la similarité visuelle.

Dans un développement, la segmentation en groupes de concepts visuels initiaux est fondée sur la similarité sémantique des concepts.

Dans un développement, la segmentation en groupes de concepts visuels initiaux s'effectue par une ou plusieurs opérations choisies parmi l'utilisation de K-moyennes et/ou de regroupements hiérarchique et/ou de maximisation de l'espérance (EM) et/ou d'algorithmes basés densité et/ou d'algorithmes connexionnistes.

Dans un développement, au moins un seuil est configurable.

Dans un développement, le procédé comprend en outre une étape consistant à recevoir et à ajouter à la description sémantique du contenu de l'image une ou plusieurs annotations textuelles de source manuelle.

Dans un développement, le procédé comprend en outre une étape consistant à recevoir au moins un paramètre associé à une requête de recherche par le contenu d'une image, ledit paramètre déterminant un ou plusieurs groupes de concepts visuels et une étape consistant à procéder à la recherche au sein des groupes de concepts déterminés.

Dans un développement, le procédé comprend en outre une étape consistant à constituer des collections de groupes de concepts visuels initiaux, une étape consistant à recevoir au moins un paramètre associé à une requête de recherche par le contenu d'une image, ledit paramètre déterminant une ou plusieurs collections parmi les collections de groupes de concepts visuels initiaux et une étape consistant à procéder à la recherche au sein des collections déterminées.

Dans ce développement, les « groupes de groupes » sont adressés.

Dans un mode de réalisation, il est possible de choisir (e.g. caractéristiques de la requête) parmi différentes partitions pré-calculées (i.e. selon des groupements différents). Dans un mode de réalisation très particulier, la partition peut (bien que difficilement) être faite en temps réel (c'est-à-dire au moment du requêtage).

Il est divulgué un produit programme d'ordinateur, ledit programme d'ordinateur comprenant des instructions de code permettant d'effectuer une ou plusieurs des étapes du procédé.

Il est également divulgué un système pour la mise en oeuvre du procédé selon une ou plusieurs des étapes du procédé.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique. Le dispositif implémentant une ou plusieurs des étapes du procédé peut utiliser un ou plusieurs circuits électroniques dédiés ou un circuit à usage général. La technique de l'invention peut se réaliser sur une machine de calcul reprogrammable (un processeur ou un micro contrôleur par exemple) exécutant un programme comprenant une séquence d'instructions, ou sur une machine de calcul dédiée (par exemple un ensemble de portes logiques comme un FPGA ou un ASIC, ou tout autre module matériel). Un circuit dédié peut notamment accélérer les performances en matière d'extraction de caractéristiques des images (ou de collections d'images ou «frames» de vidéos). A titre d'exemple d'architecture matérielle adaptée à mettre en oeuvre l'invention, un dispositif peut comporter un bus de communication auquel sont reliés une unité centrale de traitement ou microprocesseur (CPU, acronyme de *«Central Processing Unit»* en anglais), lequel processeur peut être *"multi-core"* ou *"many-core"*; une mémoire morte (ROM, acronyme de «*Read Only Memory*» en anglais) pouvant comporter les programmes nécessaires à la mise en oeuvre de l'invention; une mémoire vive ou mémoire cache (RAM, acronyme de «*Random Access Memory*» en anglais) comportant des registres adaptés à enregistrer des variables et paramètres créés et modifiés au cours de l'exécution des programmes précités; et une interface de communication ou E/S (I/O acronyme de *«Input/output»* en anglais) adaptée à transmettre et à recevoir des données (e.g. des images ou vidéos). En particulier, la mémoire vive peut permettre la comparaison rapide des images par l'intermédiaire des vecteurs associés. Dans le cas où l'invention est implantée sur une machine de calcul reprogrammable, le programme correspondant (c'est-à-dire la séquence d'instructions) peut être stocké dans ou sur un médium de stockage amovible (par exemple une mémoire flash, une carte SD, un DVD ou Bluray, un moyen de stockage de masse tel qu'un disque dur e.g. un SSD) ou non-amovible, volatile ou non-volatile, ce médium de stockage étant lisible partiellement ou totalement par un ordinateur ou un processeur. Le support lisible par ordinateur peut être transportable ou communicable ou mobile ou transmissible (i.e. par un réseau de télécommunication 2G, 3G, 4G, Wifi, BLE, fibre optique ou autre). La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués (*"Cloud computing"*), éventuellement avec ou selon des technologies de pair-à-pair et/ou de virtualisation. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif).

## Revendications

1. Procédé mis en oeuvre par ordinateur pour déterminer une description sémantique du contenu d'une image comprenant les étapes consistant à :

   - recevoir (310) un vecteur représentatif de caractéristiques visuelles extraites d'une image (300) ;
   - déterminer (325) une signature sémantique initiale pour ladite image, ladite signature sémantique initiale étant obtenue par l'application au vecteur reçu de modèles visuels individuels (323), lesdits modèles visuels individuels ayant été appris pendant une phase d'apprentissage opérée sur une pluralité d'images constituant une base de données d'images de référence (3201) comportant une pluralité de concepts visuels individuels, ladite signature sémantique initiale étant un vecteur initial dont chaque composante est une valeur de probabilité d'apparition dans ladite image d'un concept visuel individuel parmi la pluralité des concepts visuels individuels ;
   - recevoir des modèles de groupements (324) pour segmenter en groupes les concepts visuels individuels, chaque groupe de concepts regroupant des concepts visuels individuels selon une similarité visuelle et/ou sémantique; **caractérisé en ce qu'**il comprend en outre l'étape suivante :
   - appliquer (326) les modèles de groupements au vecteur initial de la signature sémantique initiale pour obtenir un vecteur modifié dont les composantes correspondant à des groupes sont déterminées par l'application d'une règle de filtrage par groupe afin de conserver au sein de chaque groupe la ou les probabilités les plus fortes et d'éliminer les faibles probabilités, une nouvelle signature sémantique étant obtenue à partir du vecteur modifié,

2. Procédé selon la revendication 1 dans lequel la règle de filtrage consiste en l'application d'un ou de plusieurs seuils.

3. Procédé selon la revendication 1 ou 2 dans lequel la règle de filtrage consiste en l'application d'une statistique d'ordre.

4. Procédé selon l'une quelconque des revendications précédentes, comprenant en outre une étape consistant à déterminer une sélection de groupes de concepts visuels individuels et une étape consistant à mettre à zéro les composantes du vecteur modifié correspondant aux groupes de concepts visuels individuels sélectionnés.

5. Procédé selon l'une quelconque des revendications précédentes dans lequel les groupes de concepts visuels individuels sont définis selon une similarité visuelle des images.

6. Procédé selon l'une quelconque des revendications précédentes dans lequel les groupes de concepts visuels individuels sont définis selon une similarité sémantique des concepts.

7. Procédé selon l'une quelconque des revendications précédentes dans lequel les groupes de concepts visuels individuels sont définis par une ou plusieurs opérations choisies parmi l'utilisation de K-moyennes et/ou de regroupements hiérarchique et/ou de maximisation de l'espérance (EM) et/ou d'algorithmes basés densité et/ou d'algorithmes connexionnistes.

8. Procédé selon la revendication 2 dans lequel au moins un seuil desdits un ou de plusieurs seuils est configurable.

9. Procédé selon l'une quelconque des revendications précédentes, comprenant en outre une étape consistant à recevoir et à ajouter à la description sémantique du contenu de l'image une ou plusieurs annotations textuelles de source manuelle.

10. Procédé selon l'une quelconque des revendications précédentes, comprenant en outre une étape consistant à recevoir au moins un paramètre associé à une requête de recherche par le contenu d'une image, ledit paramètre déterminant un ou plusieurs groupes de concepts visuels et une étape consistant à procéder à la recherche au sein des groupes de concepts visuels déterminés.

11. Procédé selon l'une quelconque des revendications précédentes, comprenant en outre une étape consistant à constituer des collections de groupes de concepts visuels individuels, une étape consistant à recevoir au moins un paramètre associé à une requête de recherche par le contenu d'une image, ledit paramètre déterminant une ou plusieurs collections parmi les collections de groupes de concepts visuels individuels et une étape consistant à procéder à la recherche au sein des collections déterminées.

12. Un produit programme d'ordinateur, ledit programme d'ordinateur comprenant des instructions de code permettant d'effectuer les étapes du procédé selon l'une quelconque des revendications 1 à 11, lorsque ledit programme est exécuté sur un ordinateur.

13. Système pour la mise en oeuvre du procédé selon l'une quelconque des revendications 1 à 11.

**Patentansprüche**

1. Computerimplementiertes Verfahren zum Bestimmen einer semantischen Beschreibung des Inhalts eines Bildes, das die folgenden Schritte umfasst:

- Empfangen (310) eines Vektors, der visuelle Merkmale repräsentiert, die aus einem Bild (300) extrahiert wurden;
- Bestimmen (325) einer semantischen Anfangssignatur für das Bild, wobei die semantische Anfangssignatur durch Anwendung einzelner visueller Modelle (323) auf den empfangenen Vektor erzielt wird, wobei die einzelnen visuellen Modelle während einer Lernphase gelernt wurden, die an einer Vielzahl von Bildern durchgeführt wurde, die eine Referenzbilddatenbank (3201), die eine Vielzahl einzelner visueller Konzepte aufweist, bilden, wobei die semantische Anfangssignatur ein Anfangsvektor ist, von dem jede Komponente ein Wahrscheinlichkeitswert für das Auftreten eines einzelnen visuellen Konzepts aus der Vielzahl der einzelnen visuellen Konzepte in dem Bild ist;
- Empfangen von Gruppierungsmodellen (324) zum Segmentieren der einzelnen visuellen Konzepte in Gruppen, wobei jede Konzeptgruppe einzelne visuelle Konzepte gemäß einer visuellen und/oder semantischen Ähnlichkeit gruppiert; **dadurch gekennzeichnet, dass** es ferner den folgenden Schritt umfasst:
- Anwenden (326) der Gruppierungsmodelle auf den Anfangsvektor der semantischen Anfangssignatur, um einen modifizierten Vektor zu erzielen, dessen den Gruppen entsprechende Komponenten durch Anwendung einer Gruppenfilterregel bestimmt werden, um innerhalb jeder Gruppe die höchste(n) Wahrscheinlichkeiten) beizubehalten und die niedrigen Wahrscheinlichkeiten zu eliminieren, wobei eine neue semantische Signatur aus dem modifizierten Vektor erzielt wird.

2. Verfahren nach Anspruch 1, wobei die Filterregel aus der Anwendung eines oder mehrerer Schwellenwerte besteht.

3. Verfahren nach Anspruch 1 oder 2, wobei die Filterregel aus der Anwendung einer Ordnungsstatistik besteht.

4. Verfahren nach einem der vorhergehenden Ansprüche, ferner umfassend einen Schritt des Bestimmens einer Auswahl von Gruppen einzelner visueller Konzepte und einen Schritt des Nullsetzens der Komponenten des modifizierten Vektors, die den ausgewählten Gruppen einzelner visueller Konzepte entsprechen.

5. Verfahren nach einem der vorhergehenden Ansprüche, wobei die Gruppen einzelner visueller Konzepte gemäß einer visuellen Ähnlichkeit der Bilder definiert werden.

6. Verfahren nach einem der vorhergehenden Ansprüche, wobei die Gruppen einzelner visueller Konzepte gemäß einer semantischen Ähnlichkeit der Konzepte definiert werden.

**7.** Verfahren nach einem der vorhergehenden Ansprüche, wobei die Gruppen einzelner visueller Konzepte durch eine oder mehrere Vorgänge definiert werden, die aus der Verwendung von K-Mittelwerten und/oder hierarchischen Gruppierungen und/oder Erwartungsmaximierung (EM) und/oder dichtebasierten Algorithmen und/oder verbindungsorientierten Algorithmen ausgewählt werden.

**8.** Verfahren nach Anspruch 2, wobei mindestens ein Schwellenwert des einen oder der mehreren Schwellenwerte konfigurierbar ist.

**9.** Verfahren nach einem der vorhergehenden Ansprüche, ferner umfassend einen Schritt des Empfangens einer oder mehrerer textueller Anmerkungen aus manueller Quelle und des zur semantischen Beschreibung des Bildinhalts Hinzufügens derer.

**10.** Verfahren nach einem der vorhergehenden Ansprüche, ferner umfassend einen Schritt des Empfangens mindestens eines Parameters, der mit einer Suchanfrage nach dem Inhalt eines Bildes verbunden ist, wobei der Parameter eine oder mehrere Gruppen von visuellen Konzepten bestimmt, und einen Schritt des Durchführens der Suche innerhalb der bestimmten Gruppen von visuellen Konzepten.

**11.** Verfahren nach einem der vorhergehenden Ansprüche, ferner umfassend einen Schritt des Bildens von Sammlungen von Gruppen einzelner visueller Konzepte, einen Schritt des Empfangens mindestens eines Parameters, der mit einer Suchanfrage nach dem Inhalt eines Bildes verbunden ist, wobei der Parameter eine oder mehrere Sammlungen unter den Sammlungen von Gruppen einzelner visueller Konzepte bestimmt, und einen Schritt des Durchführens der Suche innerhalb der bestimmten Sammlungen.

**12.** Computerprogrammprodukt, wobei das Computerprogramm Code-Anweisungen umfasst, die es ermöglichen, die Schritte des Verfahrens nach einem der Ansprüche 1 bis 11 durchzuführen, wenn das Programm auf einem Computer ausgeführt wird.

**13.** System zur Implementierung des Verfahrens nach einem der Ansprüche 1 bis 11.

**Claims**

**1.** A computer-implemented method for determining a semantic description of the content of an image comprising the steps of:

- receiving (310) a vector representative of visual characteristics extracted from an image (300);
- determining (325) an initial semantic signature for said image, said initial semantic signature being obtained by applying individual visual models (323) to the received vector, said individual visual models having been learned during a learning phase operated over a plurality of images which constitutes a database of reference images (3201) containing a plurality of individual visual concepts, said initial semantic signature being an initial vector, each component of which being a value of probability of appearance, in said image, of an individual visual concept from among the plurality of individual visual concepts;
- receiving grouping models (324) for segmenting the individual visual concepts into groups, each group of concepts grouping individual visual concepts based on a visual and/or semantic similarity; **characterised in that** it further comprises the following step of:
- applying (326) the grouping models to the initial vector of the initial semantic signature to obtain a modified vector, the components of which correspond to groups determined by applying a filtering rule for each group in order to keep within each group the highest probability or probabilities and to discard low probabilities, a new semantic signature being obtained from the modified vector.

**2.** The method according to claim 1, wherein the filtering rule consists in applying one or more thresholds.

**3.** The method according to claim 1 or 2, wherein the filtering rule consists in applying an order statistic.

**4.** The method according to any one of the preceding claims, further comprising a step of determining a selection of groups of individual visual concepts and a step of setting to zero the components of the modified vector corresponding to the groups of selected individual visual concepts.

5. The method according to any one of the preceding claims, wherein the groups of individual visual concepts are defined based on a visual similarity of the images.

6. The method according to any one of the preceding claims, wherein the groups of individual visual concepts are defined based on a semantic similarity of the concepts.

7. The method according to any one of the preceding claims, wherein the groups of individual visual concepts are defined by one or more operations chosen from among the use of K-means and/or of hierarchical groupings and/or of expectation maximisation (EM) and/or of density-based algorithms and/or of connexionist algorithms.

8. The method according to claim 2, wherein at least one threshold of said one or more thresholds is configurable.

9. The method according to any one of the preceding claims, further comprising a step of receiving and adding, to the semantic description of the content of the image, one or more textual annotations of manual source.

10. The method according to any one of the preceding claims, further comprising a step of receiving at least one parameter associated with an image content based search query, said parameter determining one or more groups of visual concepts and a step of undertaking the search within the determined groups of visual concepts.

11. The method according to any one of the preceding claims, further comprising a step of constructing collections of groups of individual visual concepts, a step of receiving at least one parameter associated with an image content based search query, said parameter determining one or more collections from among the collections of groups of individual visual concepts and a step of undertaking the search within the determined collections.

12. A computer program product, said computer program comprising code instructions making it possible to perform the steps of the method according to any one of claims 1 to 11, when said program is executed on a computer.

13. A system for the implementation of the method according to any one of claims 1 to 11.

**FIG.1**

**FIG.2**

hors ligne | en ligne

```
                                                          300
                                          ┌─────────────────┐
                                          │ Image à analyser │
      ┌───────┐                           └─────────────────┘
      │  3201                                      │      310
   ┌──┴──────┐                          ┌──────────┼──────────┐
   │   BDD   │                          │          ▼    311   │
   │  images │                          │  ┌─────────────────┐│
   └─────────┘                          │  │ i. Détermination ││
        ▲                               │  │des caractéristiques││
        │         3101                  │  │    visuelles    ││
   ┌────┼──────────────┐                │  └─────────────────┘│
   │    ▼       3111    │               │          │    312   │
   │ ┌─────────────────┐│               │          ▼          │
   │ │ i. Détermination ││              │  ┌─────────────────┐│
   │ │des caractéristiques││            │  │ ii. Normalisation ││
   │ │    visuelles    ││               │  └─────────────────┘│
   │ └─────────────────┘│               └──────────┼──────────┘
   │        │    3121    │                          │    320
   │        ▼            │               ┌─────────────────────┐
   │ ┌─────────────────┐│                │    DESCRIPTION      │
   │ │ ii. Normalisation ││              │  SEMANTIQUE SELON LE │
   │ └─────────────────┘│                │      PROCEDE        │
   │        │    3123    │               └─────────────────────┘
   │        ▼            │                          │    340
   │ ┌─────────────────┐│                     ┌───────────┐
   │ │  apprentissage  ││                     │ Annotations │
   │ └─────────────────┘│                     └───────────┘
   └────────┼───────────┘                          │    320
            │      323              ┌ ─ ─ ─ ─ ─ ─ ─┼─ ─ ─ ─ ─ ┐
       ┌────┴─────┐                                        325
       │ Banc de  │                 │ ┌─────────────────┐     │
       │ modèles  │──────────────────▶│  v. Description  │
       │ visuels  │                 │ │ sémantique de l'image│ │
       └──────────┘                   └─────────────────┘
            324                     │          │    326   │
       ┌────┴─────┐                   ┌─────────────────┐
       │ Modèle de │                │ │ vi. Simplification││
       │groupement │──────────────────▶│  de la description│ │
       └──────────┘                   └─────────────────┘
                                    │          │    327   │
                                      ┌ ─ ─ ─ ─ ─ ─ ─ ─ ┐
                                    │ ┊ vii. Ajout annotations┊│
                                      ┊ manuelles (si possible)┊
                                    │ └ ─ ─ ─ ─ ─ ─ ─ ─ ┘│
                                    └ ─ ─ ─ ─ ─ ─ ─ ─ ─ ─ ─ ┘
```

# FIG.3

FIG.4

## RÉFÉRENCES CITÉES DANS LA DESCRIPTION

**Littérature non-brevet citée dans la description**

- A unified image retrieval framework on local visual and semantic concept-based feature spaces. **RAHAN et al.** Journal of visual communication and image représentation academic press. INC, 01 Octobre 2009, vol. 20, 450-462